## Europäisches Patentamt

## European Patent Office

## Office européen des brevets

(19)

(11) Veröffentlichungsnummer: **0 082 367**
**B1**

(12) **EUROPÄISCHE PATENTSCHRIFT**

(45) Veröffentlichungstag der Patentschrift:
23.10.85

(51) Int. Cl.⁴: **B 60 T 13/14**

(21) Anmeldenummer: **82111155.6**

(22) Anmeldetag: **02.12.82**

(54) **Hydraulischer Zweikreis-Tandem-Hauptbremszylinder.**

(30) Priorität: **18.12.81 DE 3150120**
**24.03.82 DE 3210735**

(43) Veröffentlichungstag der Anmeldung:
**29.06.83 Patentblatt 83/26**

(45) Bekanntmachung des Hinweises auf die Patenterteilung:
**23.10.85 Patentblatt 85/43**

(84) Benannte Vertragsstaaten:
**DE FR GB IT SE**

(56) Entgegenhaltungen:
**DE - A - 2 254 414**
**DE - A - 2 500 536**
**DE - A - 2 519 836**
**DE - A - 2 531 264**
**FR - A - 2 164 511**
**FR - A - 2 188 773**

(73) Patentinhaber: **ROBERT BOSCH GMBH, Postfach 50,**
**D-7000 Stuttgart 1 (DE)**

(72) Erfinder: **Bertling, Hannes, Dr. Dipl.-Ing., Alter**
**Postweg 37, D-7143 Vaihingen (DE)**
Erfinder: **Leiber, Heinz, Theodor-Heuss-Strasse 34,**
**D-7141 Oberriexingen (DE)**

BUNDESDRUCKEREI BERLIN

## Beschreibung

Die Erfindung geht aus von einem hydraulischen Zweikreis-Tandem-Hauptbremszylinder nach der Gattung des Hauptanspruchs. Ein derartiger Bremszylinder ist bekannt (DE-A-2 519 836).

Bei diesem bekannten Hauptbremszylinder ist es schwer, die Betätigung des Steuerventils ausreichend feinfühlig zu machen. Wenn nämlich die Hilfskraftversorgung ausfällt, wird im ersten Teil des Pedalhubes eine schwächere Rückstellkraft erreicht, als dies der Fall ist, wenn die Hilfskraftversorgung intakt ist.

Der Erfindung liegt die Aufgabe zugrunde, diesen Nachteil zu vermeiden und einen hydraulischen Zweikreis-Tandem-Hauptzylinder zu schaffen, der auch bei Ausfall der Hilfskraftversorgung noch feinfühlig arbeitet. Außerdem soll auf einfache Weise ein Stufenhauptzylinder verwendbar sein, und es soll durch eine besondere Lagerung des pedalbetätigten Stößels eine billige gewichts- und platzsparende Bauweise ermöglicht werden.

Diese Aufgabe wird gemäß der Erfindung bei einem gattungsgemäßen Hauptbremszylinder durch die kennzeichnenden Merkmale des Patentanspruchs 1 gelöst.

Bei Verwendung einer Wegfeder oder eines anderen Wegsimulators, der zwischen das Bremspedal und das Steuerventil eingesetzt ist, bestimmt die Wegfeder die Pedalcharakteristik.

Hierbei werden dann die vorher genannten Nachteile zum Teil vermieden. Das gilt besonders dann, wenn die beiden Hauptzylinder parallel nebeneinander angeordnet sind, wie es beispielsweise durch die DE-OS 2 907 922 bekannt ist. Jedoch unterscheidet sich eine solche Bauart sehr stark von den heute üblichen Konstruktionen, so daß für eine Serieneinführung ein hoher Erprobungsaufwand erforderlich wird.

Der hydraulische Zweikreis-Tandem-Hauptbremszylinder mit den kennzeichnenden Merkmalen des Hauptanspruchs hat demgegenüber den Vorteil, daß die Bauart mit der Wegfeder unter erheblich günstigerem Aufwand wesentlich verbessert wird.

Dazu kommt, daß die Bautechnik üblicher serienmäßig hergestellter Hauptzylinder, insbesondere ein Stufenhauptzylinder verwendet werden kann. Durch Nutzung des Kolbens zur Lagerung des pedalbetätigten Stößels ergibt sich eine billige gewichts- und platzsparende Bauweise. Die Baulänge des gesamten Bremskraftverstärkers mit Hilfskolben ist mit einem einfachen Hauptbremszylinder vergleichbar.

Desweiteren ist es von Vorteil, daß durch verschiedene Ausbildungen einer Steuerkurve zur Kraftumlenkung die Pedalcharakteristik anthropotechnisch optimal auszulegen ist.

Auch ist es vorteilhaft, daß nur wenig Dichtungen gebraucht werden. Dadurch ist die Dichtungsreibung gering, was eine geringe Hysterese und gute Dosierbarkeit gewährleistet.

Mehrere Ausführungsbeispiele der Erfindung sind in der Zeichnung dargestellt und in der nachfolgenden Beschreibung näher erläutert. Es zeigt

Fig. 1 eine erste Ausführung des Hauptbremszylinders,

Fig. 2 eine Bauart wie die nach der Fig. 1, jedoch mit einer anderen Wegfeder,

Fig. 3 eine Abwandlung mit Federabstützung am pedalnahen Kolben,

Fig. 4 eine Steuerkurve unmittelbar am pedalnahen Kolben,

Fig. 5 eine andere Betätigung des Steuerventils und

Fig. 6 eine Bauart mit fußplattenbetätigtem Steuerventil.

Ein hydraulischer Zweikreis-Tandem-Hauptbremszylinder 1 hat ein Gehäuse 2 mit einem Zylinder 3, in dem hintereinander zwei Kolben 4 und 5 angeordnet sind. Der vordere Kolben 4 wird unter der Kraft einer Rückführfeder 6 gewöhnlich an einer Schulter 7 festgehalten. Er begrenzt eine Arbeitskammer 8, an die ein Bremskreis I angeschlossen ist und die in der dargestellten Ausgangsanlage des Kolbens 4 Verbindung mit einem Nachfüllbehälter 9 hat. Auf diese Weise ist hier ein geschlossener Bremskreis geschaffen. Der Kolben 4 hat zwischen zwei Laufflächen eine Schrägfläche 10, an der ein Stößel 11 eines Schalters 12 entlanglaufen kann.

Der hinter dem Kolben 4 angeordnete zweite Kolben 5 hat einen etwas größeren Durchmesser. Der Hauptbremszylinder 1 ist also ein Stufenhauptzylinder. Der Kolben 5 begrenzt eine Kammer 13, an die z. B. ein Bremskreis II angeschlossen ist. Der Kolben 5 ist ein Ringkolben, dessen wirksame Fläche durch eine Stirnfläche 14 eines ihn durchdringenden pedalbetätigten Stößels 15 ergänzt wird. Auf diese Weise ist hier ein aus Kolben 5 und Stirnfläche 14 bestehendes Hilfskolbenglied 5/14 geschaffen.

Der Stößel 15 ist an ein Bremspedal 16 angelenkt und hat eine Steuerkurve 17, an der ein Ende 18 eines Ventilbetätigungshebels 19 entlanggleitet. Der Hebel 19 ist am Gehäuse 2 gelagert und sein anderes Ende 21 wird durch eine Blattfeder 20 als Wegfeder gebildet und liegt an einem äußeren Ende eines Schiebers 22 eines Steuerventils 23 an, das in seinen beiden möglichen Endstellungen die Kammer 13 entweder mit einer Entlastungsstelle (Nachfüllbehälter 9) oder mit einer aus Pumpe 24 und Speicher 25 bestehenden Druckmittelquelle 24/25 verbindet. Ein Motor 26 ist zum Antrieb der Pumpe 24 bestimmt.

Parallel zum Steuerventil 23 ist noch ein Kolben 27 und ein vom Kolben 27 druckmittelbetätigter Schalter 28 angeordnet, mit dem der Speicherdruck überwachbar ist. Ein dritter Schalter 29 hat einen Stößel 30, mit dem die Bewegung des Hebels 19 abtastbar ist. Es ist noch zu bemerken, daß die Stirnfläche 14 vom Kolben 4 gewöhnlich einen Abstand A hat, der größer ist als der Aussteuerhub des Stößels 15 zur vollen Aussteuerung des Steuerschiebers 23.

Beim Betätigen des Bremspedals 16 wird über die Steuerkurve 17 der Hebel 19 ausgelenkt. Das Steuerventil 23 wird betätigt und steuert einen entsprechenden Hilfsdruck in die Kammer 13 ein. Dieser Druck gelangt unmittelbar in den Bremskreis II. Außerdem wirkt der eingesteuerte Druck aber auch von hinten auf den Kolben 4 ein, so daß sich dieser gegen die Kraft der Feder 6 verschiebt. Er unterbricht die Verbindung zum Nachfüllbehälter und erzeugt dann in der Kammer 8 einen Druck, der als Bremsdruck im Bremskreis I wirksam ist.

Der in die beiden Bremskreise I und II eingesteuerte Druck wirkt nun auf den Stößel 15 zurück, und der Fahrer kann durch diese Rückwirkung einen genau dosierbaren, zur Pedalkraft proportionalen Bremsdruck einsteuern. Mit größer werdender Hebelauslenkung wird auch die mit dem Hebel 19 verbundene, weggebende Blattfeder 20 bei gleicher Hebellänge um denselben Betrag vorgespannt. Die vom Steuerschieber 23 erzeugte Druckkraft wirkt über die Steuerkurve 17 auf den Stößel 15 zurück.

Die Hebelauslenkung als Funktion der Bewegung des Stößels 15 ist frei wählbar durch verschieden festlegbare Kurvenformen der Steuerkurve 17. Auf diese Weise ist eine antrophotechnisch optimale Verstärkercharakteristik erzielbar, was mit bekannten Wegsimulatorfedern nur begrenzt möglich ist.

Fällt der Bremskreis II aus, wirkt das Kolbenglied 5/14 als Verdrängerkolben und erzeugt in herkömmlicher Weise in der Kammer 13 und damit im Bremskreis II einen Druckanstieg, der über den Kolben 4 auch im Bremskreis I wirksam ist.

Bei Ausfall der hydraulischen Hilfskraftversorgung bleibt die Kammer 13 drucklos. Nach Durchlaufen eines Abstandes A' legt sich eine Bundfläche 15' des Stößels 15 an den Kolben 5 an, worauf dieser im Bremskreis II einen Druck erzeugt. Dieser Druck wirkt ebenfalls auf Kolben 4 zur Druckerzeugung im Bremskreis I. Dann erfolgt auch im Bremskreis I ein Druckanstieg. Als Gegenkraft ist nur die Kraft der Feder 6, 20 und die Kraft einer Pedalfeder wirksam.

Der Hauptbremszylinder ist mit drei elektrischen Schaltern 12, 28 und 29 kombiniert. Der Schalter 29 hat zwei Kontaktstellungen. Gewöhnlich, d. h. wenn der Speicher 25 vollen Druck hat, steht er in Neutralstellung. Wenn der Druck im Speicher 23 auf den unteren Grenzwert gesunken ist, erreicht er seine erste Kontaktstellung, in der die Hilfskraftversorgung durch Einschalten des Motors 26 anläuft und der Speicher 25 wieder auf Maximaldruck gebracht wird. Seine zweite Kontaktstellung erreicht der Schalter 29, wenn der Speicher 25 einen zu geringen Druck hat oder die Hilfskraftversorgung ausgefallen ist.

Der Schalter 28 hat ebenfalls zwei Kontaktstellungen. Eine erste wird beim Betätigen der Bremse eingenommen, um das Stopplicht einzuschalten. Eine zweite Kontaktstellung erreicht der Schalter 28, um ein Vergleichssignal zum Schalter 12 zu liefern, welches zur Ausfallanzeige oder zur Anzeige schlechter Entlüftung von Bremskreis I verwertet werden kann. Ist bei mittlerem Pedalhub, d. h. bei mittleren Bremsdrücken das Kolbenglied 5/14 überproportional weit ausgefahren, so werden die Kontakte beider Schalter 12 und 28 geschlossen. Dies ist dann ein Indiz für einen Defekt im Bremskreis I.

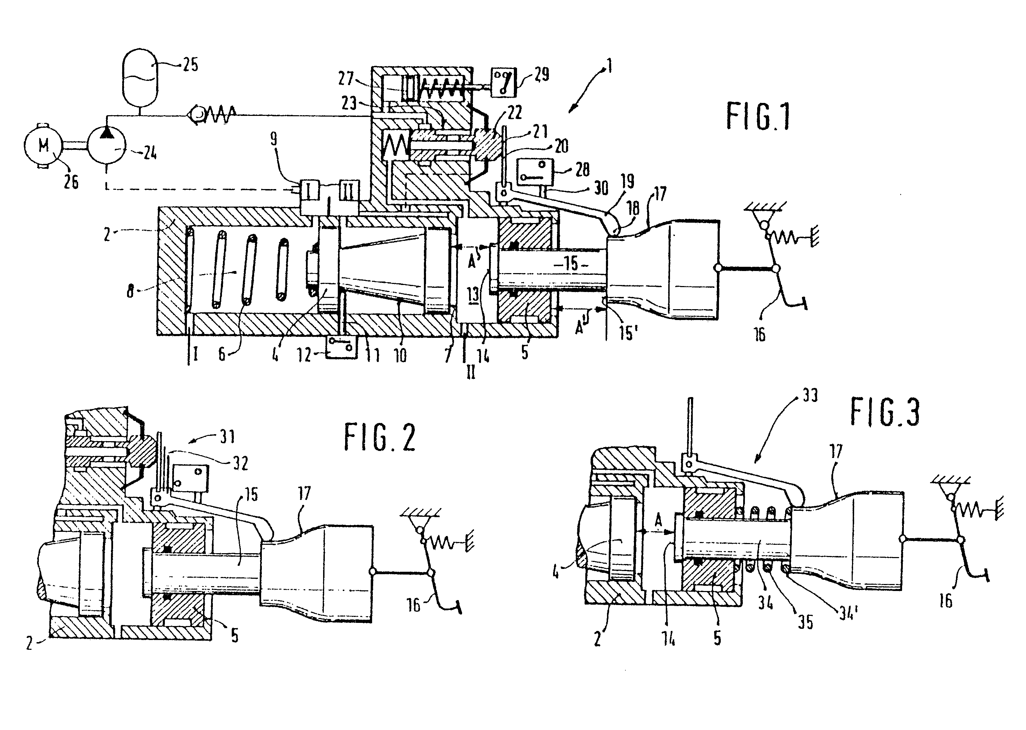

In der Fig. 2 ist eine Bauart 31 mit einer verbesserten Wegfeder dargestellt. Diese Wegfeder 32 ist wie eine lamellierte Achsfeder mit abgeknickter oder progressiver Kennlinie ausgebildet. Die Ausführung läßt die vielen Variationsmöglichkeiten der Wegfeder erkennen.

Eine weitere Verbesserung der Pedalcharakteristik ist gemäß einer Ausführung nach der Fig. 3 zu erreichen. Hier trägt ein Hauptbremszylinder 33 an seinem pedalbetätigten Stößel 34 eine starke Feder 35, die bei intakter Hilfskraftversorgung neben der durch das Druckmittel bewirkten Stößelkraft als Rückstellkraft entgegen der Pedalkraft wirksam ist.

Bei dieser Bauart läßt sich im Bereich des zur Durchsteuerung des Bremsventils notwendigen Pedalhubs ein beachtlicher Bremsdruck erzeugen, der dann nach dem Durchlaufen der Steuerventil-Wegstrecke stark progressiv ansteigt.

Bei der Ausbildung des Hauptbremszylinders 33 mit einer derartigen Feder 35 sind hinsichtlich des Abstandes A des Stößels 34 zum Kolben 4 zwei Auslegungen denkbar, die auf die jeweilige Bremskreisaufteilung optimierbar sind.

In der ersten Variante ist der Abstand A relativ gering, was bedeutet, daß zunächst bei kleinem Pedalhub gleiche Druckverhältnisse in beiden Bremskreisen I und II herrschen. Danach trifft der Stößel 34 auf den Kolben 4 und erzeugt damit in Bremskreis I einen höheren Bremsdruck als die Feder 35, die auf den Kolben 5 wirkt. Wird nun aber eine Bundfläche 34' des Stößels 34 am Kolben 5 wirksam, folgt anschließend ein stark progressiver Druckanstieg, was wiederum bei großen Pedalhüben zur Folge hat, daß beide Bremsdrücke in den Bremskreisen I und II gleich sind. Diese Auslegung ist vorteilhaft für diagonale Bremskreisaufteilung, da im Fall der Gewaltbremsung nicht zugleich alle Räder blockieren, sondern die Räder einer Diagonale infolge des höheren Bremsdruckes voreilen, damit der Fahrer in der Regel eine Vorwarnung erhält.

Bei der zweiten Variante besteht ein größerer Abstand A vom Stößel 34 zum Kolben 4, was dann im Fall des Ausfalls der hydraulischen Hilfskraftversorgung einen synchronen Verlauf der Bremsdrücke in den beiden Bremskreisen als Funktion der Pedalbetätigung zur Folge hat.

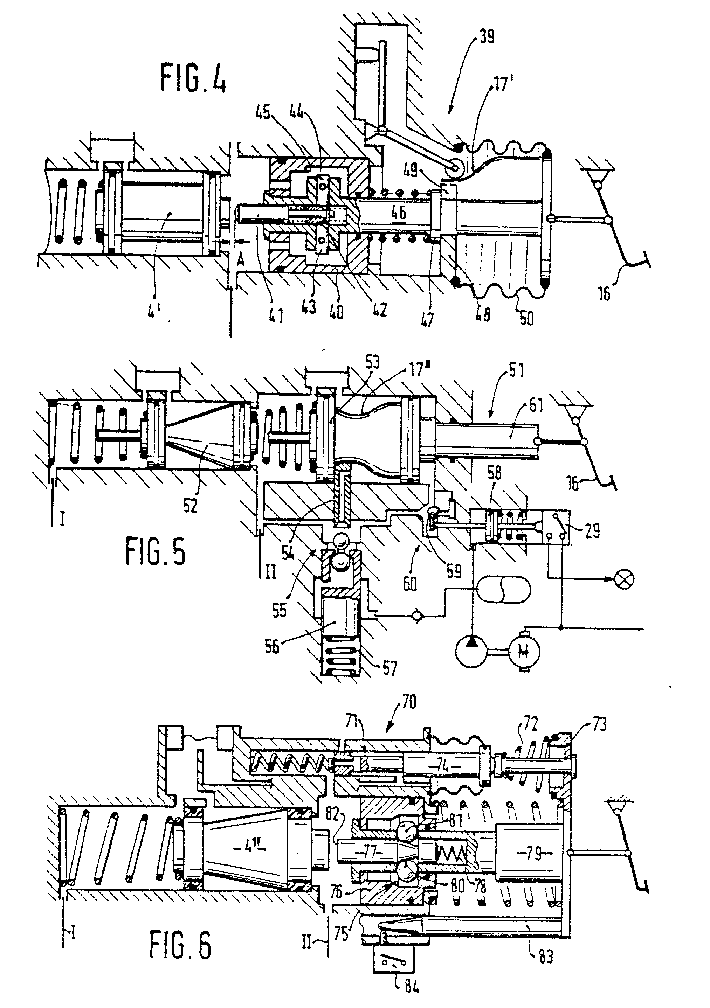

Bei der Bauart nach der Fig. 3 wird bei Ausfall der Hilfskraftversorgung im ersten Teil des Pedalhubes eine schwächere Rückstellkraft erreicht, als dies der Fall ist, wenn die Hilfskraftversorgung intakt ist. Um dies zu vermeiden, ist die Bauart nach der Fig. 4 vorgesehen. Diese Konstruktion geht von der Überlegung aus, daß bei intakter Hilfskraftversorgung der vordere Kolben 4' (Bremskreis I) mit entsprechender Dimensionierung dem Pedalhub voreilt, wodurch der pedalbetätigte Stößel nicht in Berührung mit ihm kommt. Bei geringem Abstand A dagegen tritt der Stößel in Berührung mit dem Kolben 4'. Diese Tatsache kann nun bei einem Hauptbremszylinder 39 dazu benutzt werden, in einen dem Kolben 5 nach den Fig. 1 bis 3 entsprechenden Kolben 40 einen Zwischenstößel 41 einzusetzen, der über einen Konus 42 zwei radial angeordnete Stifte 43 betätigt. Die äußeren Enden der Stifte 43 und 44 sind zur Zusammenarbeit mit einer Innenschulter 45 im Kolben 40 bestimmt. Auf diese Weise ist hier eine Kupplung 43, 44, 45 gebildet.

Wird nun also das Bremspedal 16 weiter betätigt, als es der Abstand A erfordert, werden die Stifte 43 und 44 vom Konus 42 nach außen bewegt. Sie setzen sich hinter die Innenschulter 45, so daß der Kolben 40 dann mitgenommen wird zum weiteren progressiven Druckanstieg.

Bei einer Bauart nach der Fig. 4 besteht noch der Vorteil, daß ein vom Pedal 16 bewegter Stößel 46 zweifach gelagert ist, am vorderen Ende über den Kolben 40 und am hinteren Ende nach einem Bund 47. Ein solch großer Lagerabstand sichert günstige Reibungsverhältnisse. Darüber hinaus kann eine Steuerkurve 17' einseitig als Flachstück am Stößel 46 angebracht werden, ein hinteres Lager 48 kann mit einer Aussparung 49 für die Steuerkurve 17' versehen werden, die zugleich Verdrehsicherung ist. Auch kann bei dieser Bauart das hintere Ende des Hauptbremszylinders 39 mit einer Balgmembran 50 zum Schutz gegen Korrosion und Staub abgedeckt werden.

In der Fig. 5 ist eine etwas andere Bauart dargestellt. Hier ist eine gewöhnliche Tandem-Hauptbremszylinder-Konstruktion 51 mit zwei üblichen Kolben 52 und 53 verwendet. Eine Steuerkurve 17'' ist hier in den zweiten Kolben 53 eingebaut, der von einem Pedal-Stößel 61 betätigbar ist.

Ein Hohlstößel 54 ist seitlich in der Zylinderwand angeordnet und dient zum Betätigen eines Steuerventils 55. Hinter dem Steuerventil 55 liegt ein Ventilkolben 56, der von einer Wegfeder 57 abgestützt ist, die der Wegsimulator der Einrichtung ist. Hier ist ein dem Speicherdruck unterliegender Kolben 58 des Schalters 28 (vgl. Figur 1) mit einem Ventilschließkörper 59 gekuppelt, der Schließkörper eines Umschaltventils 60 ist.

Bei dieser Bauart wird proportional zum eingesteuerten Bremsdruck der Ventilkolben 56 bewegt. Der über das Steuerventil 55 in den Bremskreis II eingesteuerte Bremsdruck wirkt über das bei intakter Hilfskraftversorgung offene Umschaltventil 60 auf den Stößel 61 zurück und ergibt somit eine druckproportionale Rückstellkraft. Bei ausgefallener Hilfskraftversorgung schaltet das Umschaltventil 60 um und verhindert dann ein Einströmen von Bremsflüssigkeit auf die Rückseite des Kolbens 53. Zugleich ist die auf dieser Rückseite liegende Kammer zur Entlastung über das Umschaltventil 60 mit dem Nachfüllbehälter verbunden.

Die Fig. 6 zeigt schließlich eine Bauart 70, bei der ein Steuerventil 71 über eine Wegfeder 72 von einer Pedalplatte 73 betätigbar ist. Das Steuerventil 71 hat einen Steuerschieber 74, der mit verhältnismäßig langen Schieberflächen ausgerüstet ist. Ähnlich wie bei der Bauart nach Fig. 4 ist auch hier eine Kupplung 75 zwischen einem Hilfskolbenglied 76/82 und einem pedalbetätigten Stößel 79 vorgesehen, die wirksam wird, wenn eine vordere Fläche 82 eines Zwischenstößels 77 am vorderen Kolben 4'' anstößt. Der über eine Feder 78 an dem Stößel 79 abgestützte Zwischenstößel 77 hat eine Kegelfläche 80, an der mehrere, gleichmäßig auf einen Kreis verteilte Kugeln 81 anliegen und die, wenn sie von der Kegelfläche 80 nach außen gedrückt werden, eine Verbindung des Stößels 79 mit einem Kolben 76 des Hilfskolbengliedes 76/82 herstellen. Dann wird bei Ausfall der Hilfskraft der Kolben 76 mitgenommen, um einen weiteren progressiven Druckanstieg zu erreichen.

Beim Betätigen der Bremse wird bei dieser Bauart der Steuerschieber 74 über die Wegfeder 72 sofort betätigt. Der Bremsdruck kann sich bei dieser Bauart also sehr schnell aufbauen.

Der mit langen Schieberflächen ausgerüstete Steuerschieber 74 schaltet die Energieversorgung auf den Bremskreis II und es wird in beiden Kreisen I und II gebremst.

Fällt die Energieversorgung aus, so kann unter Weiterbewegung des Steuerschiebers 74 der volle Pedalweg zur Betätigung des Hilfskolbengliedes 76/82 genutzt werden. Dabei wird der Steuerschieber 74 zu seinem Endanschlag verschoben und erst dann wird der letzte Hub der Wegfeder 72 ausgenutzt.

Sollte der Steuerschieber 74 blockieren, so kann der mögliche Weg der Wegfeder 72 zur Betätigung des Hilfskolbengliedes 76/82 verwendet werden. In diesem Fall wird über den Zwischenstößel 77 mit dem Kolben 4'' im geschlossenen Bremskreis I ein Bremsdruck erzeugt.

Auch bei dieser Hauptbremszylinder-Bauart 70 ist ein über einen pedalplattenfesten Stößel 83 betätigbarer Schalter 84 vorgesehen, dessen Bedeutung später erläutert wird.

Es ist noch zu bemerken, daß auch beim Hauptbremszylinder 1, 31, 33, 39 und 51 ein Festhängen des Steuerventils keinen Ausfall der Bremsdruckerzeugung nach sich zieht. In einem solchen Fall arbeitet der Hauptbremszylinder geradeso wie bei einem Ausfall der Hilfskraft.

Desweiteren ist darauf hinzuweisen, daß jeweils die vordere der beiden Dichtungen der Kolben 5, 40 und 53 als Schnüffelmanschette ausgebildet ist, damit bei ausgefallener Hilfskraftversorgung die volle Funktion eines Hauptzylinders dargestellt wird.

Die vorgeschlagenen Hauptbremszylinder-Bauarten 1, 31, 33, 39, 51 und 70 eignen sich hervorragend zu einer Kombination mit einer Blockierschutzeinrichtung, weil sie sehr klein sind und ein gutes Ansprechverhalten haben. Dann können die Signale der Schalter 12, 28, 29, 84 in dem elektronischen Steuergerät der Blockierschutzeinrichtung ausgewertet und gegebenenfalls mit Blockierschutzsignalen verknüpft werden.

## Patentansprüche

1. Hydraulischer Zweikreis-Tandem-Hauptbremszylinder für Fahrzeug-Bremsanlagen, mit einem Bremskolben (10) für einen geschlossenen (I) und mit einer stößelbetätigten Steuerventil-Einrichtung (23) für einen hilfskraftunterstützten, offenen (II) Bremskreis, wobei das Steuerventil über einen fußbetätigten Stößel (46, 79) betätigbar ist und ein pedalnahes Hilfskolbenglied (40, 41; 76/82) eine Wirkfläche (18, 82) zum Fühlbarmachen der Rückwirkung des eingesteuerten Bremsdruckes hat, dadurch gekennzeichnet, daß zwischen einem vom Stößel (46, 79) bewegbaren Zwischenstößel und dem Hilfskolbenglied (40/41; 76/82) eine Kupplung (43, 44, 45; 75) vorgesehen ist, die erst nach Zurücklegen einer vorbestimmten Strecke des Stößels (46, 79) betätigt ist.

2. Hydraulischer Zweikreis-Tandem-Hauptbremszylinder nach Anspruch 1, dadurch gekennzeichnet, daß das Steuerventil (23) mit Kraftumlenkung über eine Steuerkurve (17, 17', 17'') betätigbar ist.

3. Hydraulischer Zweikreis-Tandem-Hauptbremszylinder nach Anspruch 1 mit einem über eine Wegfeder betätigbaren, parallel zu dem Hilfskolbenglied angeordneten Steuerventil, dadurch gekennzeichnet, daß das Steuerventil (71) mit einer entsprechend dem möglichen Hub des Hilfskolbengliedes (76/82) langen Steuerschieberfläche versehen ist.

4. Hydraulischer Zweikreis-Tandem-Hauptbremszylinder nach Anspruch 1, dadurch gekennzeichnet, daß das Hilfskolbenglied (5/14; 40/41) einen Kolben (5, 40) hat, der von einem Stößel (15, 34, 46) durchdrungen ist, ferner daß Stößel (15, 34, 46) und Kolben (5, 40) die pedalnahe Rückwand des Hauptbremszylinders bilden und daß der Stößel (15, 34, 46) allein oder gegebenenfalls gemeinsam mit dem Kolben (5, 40) bei Ausfall der Hilfskraft eine bremsdruckerzeugende Kolbenfläche darstellen.

5. Hydraulischer Zweikreis-Tandem-Hauptbremszylinder nach Anspruch 2 oder 3, dadurch gekennzeichnet, daß die Ausbildung der Steuerkurve (17, 17', 17'') maßgebend ist für die Pedalcharakteristik des Bremspedals (16).

6. Hydraulischer Zweikreis-Tandem-Hauptbremszylinder nach einem der Ansprüche 2 bis 5, dadurch gekennzeichnet, daß zwischen die Steuerkurve (17, 17') und das vorzugsweise über einen Hebel (19) von ihr betätigbare Steuerventil (23) ein Federelement (Blattfeder 20, 32) eingesetzt ist.

7. Hydraulischer Zweikreis-Tandem-Hauptbremszylinder nach Anspruch 6, dadurch gekennzeichnet, daß das Federelement (Blattfeder 20) eine lineare Kennlinie hat.

8. Hydraulischer Zweikreis-Tandem-Hauptbremszylinder nach Anspruch 6, dadurch gekennzeichnet, daß das Federelement (Blattfeder 32) eine gekrümmte bzw. abgeknickte Kennlinie hat.

9. Hydraulischer Zweikreis-Tandem-Hauptbremszylinder nach einem der Ansprüche 1 bis 8, dadurch gekennzeichnet, daß der Stößel (34) am Hilfskolbenglied (5/14, 40/41) über eine Feder (35) abgestützt ist.

10. Hydraulischer Zweikreis-Tandem-Hauptbremszylinder nach einem der Ansprüche 1 bis 9, dadurch gekennzeichnet, daß der Bremskolben (4) des geschlossenen Bremskreises (I) von einem hauptbremszylinderseitigen Ende (Stirnfläche 14) des Hilfskolbengliedes (5/14) oder des Stößels (15) einen Abstand (A) hat, der größer ist als ein Aussteuerhub des Stößels (15).

11. Hydraulischer Zweikreis-Tandem-Hauptbremszylinder nach einem der Ansprüche 1 bis 10, dadurch gekennzeichnet, daß das Steuerventil (23) über einen Hebel (19) betätigbar ist.

12. Hydraulischer Zweikreis-Tandem-Hauptbremszylinder nach einem der Ansprüche 1 bis 10, dadurch gekennzeichnet, daß das Steuerventil (23) über eine Pedalplatte betätigbar ist.

13. Hydraulischer Zweikreis-Tandem-Hauptbremszylinder nach Anspruch 1 mit einem Hohlstößel zur Steuerventilbetätigung, dadurch gekennzeichnet, daß das Steuerventil (55) senkrecht zur Achse des Hauptbremszylinders angeordnet ist und daß das dem Steuerventil (55) abgekehrte Ende des Hohlstößels (54) zur unmittelbaren Zusammenarbeit mit der Steuerkurve (17'') bestimmt ist (Fig. 5).

14. Hydraulischer Zweikreis-Tandem-Hauptbremszylinder nach einem der Ansprüche 1 bis 13, dadurch gekennzeichnet, daß der Kolben (53) des Hilfskolbengliedes mit zwei Dichtungen versehen ist, und daß die hilfsdruckbeaufschlagte vordere Dichtung als Schnüffelmanschette ausgebildet ist (Fig. 5).

15. Hydraulischer Zweikreis-Tandem-Hauptbremszylinder nach einem der Ansprüche 1 bis 14, dadurch gekennzeichnet, daß in einem Gehäuse des Hauptzylinders (1, 5) ein zusätzlicher Kolben (27, 58) angeordnet ist, der dem Speicherdruck der Hilfskraft unterliegt und der zur Zusammenarbeit mit einem elektrischen Schalter (29) zur Überwachung der Speicherladung bestimmt ist.

16. Hydraulischer Zweikreis-Tandem-Hauptbremszylinder nach einem der Ansprüche 1 bis 15, dadurch gekennzeichnet, daß mindestens ein Schalter (12, 28, 84) zur Erkennung des Ausfalls eines Bremskreises verwendet ist.

17. Hydraulischer Zweikreis-Tandem-Hauptbremszylinder nach einem der Ansprüche 1 bis 16 gekennzeichnet durch seine Kombination mit einer Blockierschutzeinrichtung.

## Claims

1. Hydraulic dual-circuit tandem brake master cylinder for vehicle installations with a brake piston (10) for a closed brake circuit (I) and with a push-rodactuated control valve device (23) for a servo powerassisted open brake circuit (II), wherein the control valve is actuable via a foot-actuated push-rod (46, 79) and an auxiliary piston member (40/41; 76/82) near the pedal has an active surface (14, 82) to make perceptible the reaction of the brake pressure adjusted, characterised in that a coupling (43, 44, 45; 75) which is provided between an intermediate push-rod movable by the push-rod (46, 79) and the auxiliary piston member (43/41; 76/82) is actuated only after a predetermined stroke of the push-rod (46, 79) has been travelled.

2. Hydraulic dual-circuit tandem master cylinder according to Claim 1, characterised in that the control valve (23) is actuable via a control cam (17, 17′, 17″) with redirection of force.

3. Hydraulic dual-circuit tandem master cylinder according to Claim 1 with a control valve actuable via a travel limiting spring and arranged parallel to the auxiliary piston member, characterised in that the control valve (71) is provided with a control slide surface corresponding in length to the possible stroke of the auxiliary piston member (76/82).

4. Hydraulic dual-circuit tandem master cylinder according to Claim 1, characterised in that the auxiliary piston member (5/14; 40/41) has a piston (5, 40) which is penetrated by a push-rod (15, 34, 46), and also that push-rod (15, 34, 36) and piston (5, 40) form the wall, near the pedal, of the brake master cylinder, and that the push-rod (15, 34, 46), alone or optionally conjointly with the piston (5, 40) constitute a piston surface generating brake pressure upon failure of the servo power.

5. Hydraulic dual-circuit tandem brake master cylinder according to Claim 2 or 3, characterised in that the construction of the control cam (17, 17′, 17″) is critical for the pedal characteristic of the brake pedal (16).

6. Hydraulic dual-circuit tandem brake master cylinder according to one of Claims 2 to 5, characterised in that a spring element (leaf spring 20, 32) is inserted between the control cam (17, 17′) and the control valve (23) which is preferably actuable thereby via a lever (19).

7. Hydraulic dual-circuit tandem brake master cylinder according to Claim 6, characterised in that the spring element (leaf spring 20) has a linear characteristic.

8. Hydraulic dual-circuit tandem brake master cylinder according to Claim 6, characterised in that the spring element (leaf spring 32) has a curved or bent characteristic.

9. Hydraulic dual-circuit tandem brake master cylinder according to one of Claims 1 to 8, characterised in that the push-rod (34) is braced against the auxiliary piston member (5/14, 40/41) via a spring (35).

10. Hydraulic dual-circuit tandem bracke master cylinder according to one of Claims 1 to 9, characterised in that the brake piston (4) of the closed brake circuit (I) has an interval (A) from one end (end face (14)) of the auxiliary piston member (5/14) or of the push rod (15) on the brake master cylinder side which is greater than a modulation stroke of the push-rod (15).

11. Hydraulic dual-circuit tandem brake master cylinder according to one of Claims 1 to 10, characterised in that the control valve (23) is actuable via a lever (19).

12. Hydraulic dual-circuit tandem brake master cylinder according to one of Claims 1 to 10, characterised in that the control valve (23) is actuable via a pedal plate.

13. Hydraulic dual-circuit tandem brake master cylinder according to Claim 1 with a hollow push-rod for the control valve actuation, characterised in that the control valve (55) is arranged at right angles to the axis of the brake master cylinder and that the end of the hollow push-rod (54) remote from the control valve (55) is intended for direct cooperation with the control cam (17″) (Figure 5).

14. Hydraulic dual-circuit tandem brake master cylinder according to one of Claims 1 to 13, characterised in that the piston (53) of the auxiliary piston member is provided with two seal elements, and that the front seal element, which is stressed by the servo power, is constructed as a breather sleeve (Figure 5).

15. Hydraulic dual-circuit tandem brake master cylinder according to one of Claims 1 to 14, characterised in that an additional piston (27, 58), which is arranged in a housing of the main cylinder (1, 5) is subject to the accumulator pressure of the servo power and is intended to cooperate with an electrical switch (29) to monitor the accumulator charge.

16. Hydraulic dual-circuit tandem brake master cylinder according to one of Claims 1 to 15, characterised in that at least one switch (12, 28, 84) is used to detect the failure of a brake circuit.

17. Hydraulic dual-circuit tandem brake master cylinder according to one of Claims 1 to 16, characterised by its combination with an antilocking device.

**Revendications**

1. Maitre-cylindre de frein hydraulique à double circuit du type tandem pour installations de freinage de véhicule, comportant un piston de freinage (10) pour un circuit de frein (I) fermé et comportant un dispositif de vanne de commande (23) actionné par un poussoir pour un circuit de frein (II) assisté, ouvert, étant précisé que la vanne de commande peut être actionnée par un poussoir (46, 79) manœuvré au pied et étant précisé qu'un élément (40/41; 76/82) formant piston du circuit d'assistance situé près de la pédale possède une surface active (14, 82) pour rendre sensitive la réaction de la pression de freinage provoquée, caractérisé en ce qu'il est prévu, entre un poussoir intermédiaire que peut déplacer le poussoir (46, 79) et l'élément (40/81; 76/82) formant piston du circuit d'assistance un accouplement (43, 44, 45; 75) qui n'est en activité qu'après que le poussoir (46, 79) a parcouru une course prédéterminée.

2. Maitre-cylindre de frein hydraulique à double circuit tu type tandem selon la revendication 1, caractérisé en ce que la vanne de commande (23) peut être actionnée par l'intermédiaire d'une courbe de commande (17, 17', 17") avec inversion de force.

3. Maitre-cylindre de frein hydraulique à double circuit tu type tandem selon la revendication 1, comportant une vanne de commande disposée parallèlement à l'élément formant piston du circuit d'assistance et qu'un ressort de simulation de course peut manœuvrer, caractérisé en ce que la vanne de commande (71) comporte une surface de tiroir de commande de longueur correspondant à la course possible d l'élément (76/82) formant piston du circuit d'assistance.

4. Maitre-cylindre de frein hydraulique à double circuit tu type tandem selon la revendication 1, caractérisé en ce que l'élément (5/14; 40/41) formant piston du circuit d'assistance comporte un piston (5, 40) que traverse un poussoir (15, 34, 46); en ce qu'en outre poussoir (15, 34, 46) et piston (5, 40) forment la paroi arrière, proche de la pédale, du maitre-cylindre de frein; et en ce que le coulisseau (15, 34, 46), seul ou éventuellement en commun avec le piston (5, 40), forme, en cas de défaillance du circuit d'assistance, une surface de piston qui produit la pression de freinage.

5. Maitre-cylindre de frein hydraulique à double circuit du type tandem selon la revendication 2 ou la revendication 3, caractérisé en ce que la forme de la courbe de commande (17, 17', 17") est décisive pour la caractéristique de la pédale de frein (16).

6. Maitre-cylindre de frein hydraulique à double circuit tu type tandem selon l'une des revendications 2 à 5, caractérisé en ce qu'entre la courbe de commande (17, 17') et la vanne de commande (23) que cette courbe peut actionner, de préférence par l'intermédiaire d'un levier (19), est disposé un élément formant ressort (ressort à lame 20, 32).

7. Maitre-cylindre de frein hydraulique à double circuit tu type tandem selon la revendication 6, caractérisé en ce que l'élément formant ressort (ressort à lame 20) a une caractéristique linéaire.

8. Maitre-cylindre de frein hydraulique à double circuit tu type tandem selon la revendication 6, caractérisé en ce que l'élément formant ressort (ressort à lame 32) a une caractéristique coudée ou brisée.

9. Maitre-cylindre de frein hydraulique du type tandem selon l'une des revendications 1 à 8, caractérisé en ce que le poussoir (34) s'appuie sur l'élément (5/14, 40/41) formant piston du circuit d'assistance par l'intermédiaire d'un ressort (35).

10. Maitre-cylindre de frein hydraulique à double circuit du type tandem selon l'une des revendications 1 à 9, caractérisé en ce que le piston (4) du circuit de frein (I) fermé est à une distance (A) d'une extrémité côté maitre-cylindre de frein (surface frontale (14)) de l'élément (5/14), formant piston du circuit d'assistance, ou du poussoir (15) qui est supérieure à la course de commande de ce coulisseau (15).

11. Maitre-cylindre de frein hydraulique à double circuit du type tandem selon l'une des revendications 1 à 10, caractérisé en ce qu'un levier (19) peut actionner la vanne de commande (23).

12. Maitre-cylindre de frein hydraulique à double circuit du type tandem selon l'une des revendications 1 à 10, caractérisé en ce qu'une plaque liée à la pédale peut manœuvrer la vanne de commande (23).

13. Maitre-cylindre de frein hydraulique à double circuit tu type tandem selon la revendication 1, comportant un coulisseau creux pour manœuvrer la vanne de commande, caractérisé en ce que la vanne de commande (55) est disposée perpendiculairement à l'axe du maitre-cylindre de frein; et en ce que l'extrémité du coulisseau creux (54) opposée à la vanne de commande (55) est prévue pour collaborer directement avec la courbe de commande (17") (figure 5).

14. Maitre-cylindre de frein hydraulique à double circuit du type tandem selon l'une des revendications 1 à 13, caractérisé en ce que le piston (53) de l'élément formant piston du circuit d'assistance comporte deux garnitures d'étanchéité; et en ce que la garniture d'étanchéité avant, sollicitée par la pression du circuit d'assistance, est conçue comme garniture à reniflard (figure 5).

15. Maitre-cylindre de frein hydraulique à double circuit du type tandem selon l'une des revendications 1 à 14, caractérisé en ce que dans un carter du maitre-cylindre (1, 5) est disposé un piston supplémentaire (27, 58) soumis à la pression du réservoir du circuit d'assistance et destiné à collaborer avec un commutateur électrique (29) pour surveiller la charge du réservoir.

16. Maitre-cylindre de frein hydraulique à double circuit du type tandem selon l'une des revendications 1 à 15, caractérisé en ce qu'on utilise au moins un commutateur (12, 28, 84) pour avoir connaissance de la défaillance d'un circuit de freinage.

17. Maitre-cylindre de frein hydraulique à double circuit du type tandem selon l'une des revendications 1 à 16, caractérisé par sa combinaison avec un dispositif de protection anti-blocage.

FIG.1

FIG.2

FIG.3

0 082 367

FIG. 4

FIG. 5

FIG. 6